# EUROPÄISCHE PATENTSCHRIFT

(11) **EP 0 792 898 B1**
(45) Veröffentlichungstag und Bekanntmachung des Hinweises auf die Patenterteilung: **13.12.2000**
(21) Anmeldenummer: 97102944.2
(22) Anmeldetag: 22.02.1997
(51) Int. Cl.: C08G 18/08, C08G 18/28, C08G 18/70, C09D 175/04

(54) **Verfahren zur Herstellung einer Bindemittelkomponente für wässrige Zweikomponenten-Überzugsmittel**
Process for preparation of a binder-component for aqueous two-component coatings
Procédé de préparation d'un composant liant pour compositions de recouvrement à deux composants

(30) Priorität: 29.02.1996 DE 19607672
(43) Veröffentlichungstag der Anmeldung: 03.09.1997
(73) Patentinhaber: E.I. DU PONT DE NEMOURS AND COMPANY, Wilmington Delaware 19898 (US)
(72) Erfinder: Göbel, Armin, 58300 Wetter (DE); Vogt-Birnbrich, Bettina, Dr., 42719 Solingen (DE); Collong, Wilfried, Dr., 42929 Wermelskirchen (DE); Kleuser, Birgit, 42369 Wuppertal (DE); Lenhard, Werner, Dr., 42109 Wuppertal (DE); Besold, Robert, Dr., 42279 Wuppertal (DE)
(74) Vertreter: Gille Hrabal Struck Neidlein Prop Roos

(56) Entgegenhaltungen:
- EP-A- 0 024 296
- EP-A- 0 542 105
- EP-A- 0 587 061
- WO-A-93/09157

## Beschreibung

Die Erfindung betrifft ein Verfahren zur Herstellung lagerstabiler wasserverdünnbarer, hydroxyfunktionelle Bindemittel enthaltender Komponenten für wasserverdünnbare zweikomponentige (2K)-Überzugsmittel sowie die Verwendung dieser Komponenten in zweikomponentigen Überzugsmitteln bei der Mehrschichtlackierung in der Fahrzeug- und Industrielackierung.

In den letzten Jahren gewannen wäßrige Lacke und Beschichtungen aufgrund sich verschärfender Emissionsrichtlinien im Hinblick auf die bei der Lackapplikation freiwerdenden Lösemittel stark an Bedeutung. Obwohl inzwischen bereits für viele Anwendungsgebiete wäßrige 2K-Systeme zur Verfügung stehen, erreichen diese noch nicht in allen Punkten das hohe Qualitätsniveau konventioneller lösemittelhaltiger 2K-Lacke.

Wasserverdünnbare 2K-Systeme auf Basis einer hydroxyfunktionellen und einer Polyisocyanatkomponente sind mittlerweile in größerer Zahl beschrieben worden. Beispielsweise werden isocyanatvernetzende 2K-Systeme auf Basis von Polyacrylatpolyolen beschrieben in den EP-A-0 358 979, WO-A-94/03516, EP-A-0 554 747 und EP-A-0 557 844, 2K-Systeme auf Basis von Polyurethanpolyolen sind z.B. beschrieben in EP-A-0 496 205, WO-A-94/03511 und EP-A-0 554 747 und auf Basis von Polyesterpolyolen z.B. in EP-A-0 537 568 und WO-A-94/03513. Mischungen der genannten Polyole sind beispielsweise beschrieben in EP-A-0 542 105 und EP-A-0 610 450.

Ein wesentlicher Nachteil aller genannten 2K-Systeme besteht darin, daß die fertige, OH-funktionelle Bindemittel enthaltende Komponente in Form einer wasserverdünnbaren Dispersion, wie sie beispielsweise als sogenanntes Stammaterial in der Lackierwerkstatt vorliegt, eine ungenügende Lagerstabilität aufweist. In der Regel kommt es bei diesen wasserverdünnbaren Dispersionen nach einigen Wochen oder Monaten zur Phasenseparation. In solchen Anwendungsgebieten, wie z.B. der Fahrzeugreparaturlackierung, in denen eine Langzeitstabilität von 1 bis 3 Jahren gefordert wird, sind die bislang beschriebenen wasserverdünnbaren 2K-Systeme daher nur bedingt einsetzbar.

Außerdem sind in vielen Fällen auch die Verarbeitungszeiten, d.h. die Zeiten innerhalb derer der fertige Lack nach Vermischen der beiden Komponenten noch verarbeitbar ist, zu kurz.

Die DE-A-44 21 823 beschreibt wäßrige Beschichtungsmittel, die aus verschiedenen Komponenten mischbar sind; die Einmischung wäßriger Bestandteile erfolgt unmittelbar vor der Applikation der Überzugsmittel. Die DE-A-41 10 520 beschreibt Mischsysteme für wasserverdünnbare Überzugsmittel, die ebenfalls unmittelbar vor der Applikation gemischt werden.

Aufgabe der Erfindung war es daher, wasserverdünnbare hydroxyfunktionelle Bindemittel enthaltende Komponenten für wasserverdünnbare zweikomponentige Überzugsmittel bereitzustellen, die eine ausreichende Langzeitlagerstabilität aufweisen. Die fertigen Überzugsmittel sollen außerdem eine erhöhte Verarbeitungszeit besitzen.

Es hat sich gezeigt, daß diese Aufgabe gelöst wird, durch das einen Gegenstand der Erfindung darstellende Verfahren zur Herstellung einer als Bindemittelkomponente für wäßrige Zweikomponenten-Überzugsmittel verwendbaren oder zur Herstellung einer derartigen Bindemittelkomponente geeigneten wäßrigen, lackübliche Additive enthaltenden Dispersion lacküblicher, hydroxyfunktioneller Bindemittel, die ionische, nicht-ionische hydrophile und/oder neutralisierbare saure oder basische Gruppen enthalten, das dadurch gekennzeichnet ist, daß man das hydroxyfunktionelle Bindemittel, das in Gegenwart von organischem Lösemittel vorliegen kann, in nicht-wäßriger Phase mit zumindest einem Teil der vorgesehenen lacküblichen Additve vermischt, vorhandene saure oder basische Gruppen vor, während oder nach dem Vermischen mit den Additiven, zumindest teilweise neutralisiert, die so erhaltene Mischung homogenisiert und anschließend in die wäßrige Phase überführt und, falls ein Rest an lacküblichen Additiven vorliegt, diesen zusetzt.

Die durch das erfindungsgemäße Verfahren bereitgestellte Dispersion wird im folgenden als Stammkomponente bezeichnet. Die Stammkomponente enthält ein oder mehrere hydroxyfunktionelle Bindemittel, wie vorstehend beschrieben, Wasser, lackübliche Additive sowie gegebenenfalls ein oder mehrere organische Lösemittel und/oder ein oder mehrere Pigmente und/oder Füllstoffe.

Es wurde überraschend gefunden, daß durch die erfindungsgemäße Verfahrensweise, im Gegensatz zur sonst üblichen Vorgehensweis, bei der die Additivzugabe immer während und/oder nach der Dispersions- bzw. Emulsionsbildung in der wäßrigen Phase erfolgt, eine sehr gute Lagerstabilität der Stammkomponente auch über längere Zeiträume erhalten wird. Überraschenderweise wird durch die erfindungsgemäße Vorgehensweise die Verarbeitungszeit von die erfindungsgemäß hergestellte Bindemittelkomponente enthaltenden Überzugsmitteln verbessert.

Die Herstellung der wäßrigen Stammkomponente kann im einzelnen beispielsweise wie folgt durchgeführt werden. Die OH-funktionellen Bindemittel werden in üblicher Art und Weise durch Polymerisation, Polykondensation und/oder Polyaddition in wasserfreier Form hergestellt. Dabei werden jeweils lösemittelbasierende Lösungen bzw. Dispersionen oder Schmelzen der OH-funktionellen Bindemittel erhalten. Um den Bindemitteln die für die Überführung in die wäßrige Phase erforderliche Hydrophilie zu verleihen, sind diese ionisch und/oder nicht-ionisch modifiziert.

Nach Herstellung der OH-funktionellen Bindemittel in wasserfreier Form wird zumindest ein Teil der im fertigen Überzugsmittel enthaltenen lacküblichen Additive zu der Lösung, Dispersion oder Schmelze hinzugegeben. Die Zugabe der Additive kann jedoch auch erfolgen, nachdem in der Lösung oder Dispersion vorhandene Lösemittel ganz oder teilweise entfernt wurden. Erfindungswesentlich ist jedoch, daß die Zugabe zumindest eines Teils der Additive vor der Überführung der OH-funktionellen Bindemittel in die wäßrige Phase erfolgt. Dabei kann auch die gesamte Additivmenge vor der Überführung der OH-funktionellen Bindemittel in die wäßrige Phase zugegeben werden. Wird nur ein Teil der lacküblichen Additive zugesetzt, so kann es sich hierbei um eine Teilmenge eines oder mehrerer spezieller Additive und/oder um unterschiedliche Additive handeln, von denen jeweils einige erfindungsgemäß und andere in konventioneller Weise der fertigen Dispersion zugesetzt werden. Dabei ist es bevorzugt keine Teilmengen einzelner spezieller Additive, sondern jeweils die Gesamtmenge eines speziellen Additivs erfindungsgemäß zuzusetzen. Nach Zugabe der Additive werden alle Komponenten homogenisiert. Das Homogenisieren kann beispielsweise durch Einsatz üblicher Homogenisatoren (z.B. üblicher Rühraggregate) erfolgen. Das Homogenisieren kann bei erhöhten Temperaturen, beispielsweise bei 40 bis 60°C durchgeführt werden.

Mit basischen oder sauren Gruppen modifizierte Bindemittel werden vor der Überführung in die wäßrige Phase neutralisiert. Dabei ist es möglich, die entsprechenden Neutralisationsmittel vor, während oder nach der Zugabe der Additive zuzusetzen. Bevorzugt werden die Neutralisationsmittel nach Zugabe der Additive zugesetzt. Es erfolgt wieder eine Homogenisierung. Das Homogenisieren kann wie vorstehend für die Zugabe der Additive beschrieben, durchgeführt werden. Auch hier ist es möglich, bei erhöhter Temperatur, beispielsweise bei 40 bis 60°C zu homogenisieren.

Nach der Zugabe von Additiven und Neutralisationsmitteln erfolgt dann die Dispersionsbildung in wäßriger Phase. Die Dispergierung erfolgt in üblicher Weise, wobei entweder die organische Phase zur wäßrigen Phase oder Wasser zur organischen Phase gefügt werden kann. Nach der Bildung der Dispersion können noch von der Herstellung stammende organische Lösungsmittel, sofern diese nicht vorher bereits entfernt wurden und in t sind, entfernt werden; dies kann beispielsweise destillativ erfolgen. Während und/oder nach der Dispersionsbildung kann der gegebenenfalls vorhandene restliche Teil der Additive zugegeben werden, worunter auch ein oder mehrere organische, bevorzugt wassermischbare, Lösemittel fallen können. Die Lösemittel werden in dem Fachmann geläufiger Menge zugesetzt, um beispielsweise gewünschte Rheologie- oder Viskositätseigenschaften zu erzielen.

Wenn die so erhaltene Stammkomponente in pigmentierten Überzugsmitteln eingesetzt werden soll, so ist es auch möglich, in die Stammkomponente ein oder mehrere Pigmente und/oder Füllstoffe (die nicht unter die Definition der erfindungsgemäß einarbeitbaren Additive fallen) einzuarbeiten. Dies kann beispielsweise durch Einarbeitung der Pigmente und/oder Füllstoffe gleichzeitig mit den restlichen lacküblichen Additiven oder anschließend an deren Zugabe erfolgen. Zur Einarbeitung von Pigmenten und/oder Füllstoffen kann beispielsweise in üblicher Weise homogenisiert bzw. vermahlen werden. Beispielsweise kann so vorgegangen werden, daß ein Teil oder die gesamte Menge der nach dem erfindungsgemäßen Verfahren hergestellten Stammkomponente mit den Pigmenten und/oder Füllstoffen sowie gegebenenfalls Lösemitteln und gegebenenfalls restlichen lacküblichen Additiven vermischt und in Mahlaggregaten angerieben wird. Danach wird das Mahlgut gegebenenfalls mit der restlichen Bindemittelmenge komplettiert. Es ist jedoch auch möglich, die Pigmente zunächst in einem Pastenharz anzureiben und anschließend mit der erfindungsgemäß hergestellten Stammkomponente zu komplettieren. Bei den Pastenharzen kann es sich beispielsweise um übliche Pastenharze auf Basis von Polyester-, Polyacrylat- und/oder Polyurethanharzen handeln. Bevorzugt einsetzbare Polyurethanpastenharze sind beispielsweise beschrieben in der EP-A-0 438 090.

Als Pigmente bzw. Füllstoffe sind alle lacküblichen Pigmente organischer oder anorganischer Natur geeignet. Beispiele für anorganische oder organische Farbpigmente und Füllstoffe sind Titandioxid, mikronisiertes Titandioxid, Eisenoxidpigmente, Zinkphosphat (Korrosionsschutzpigment), Azopigmente, Phthalocyaninpigmente, Chinacridon- oder Pyrrolopyrrolpigmente, Ruß, Siliciumdioxid, Bariumsulfat, Talkum, Aluminiumsilikat, Magnesiumsilikat.

Bei den im erfindungsgemäßen Verfahren zusetzbaren Additiven handelt es sich um die üblichen auf dem Lacksektor einsetzbaren Additive. Derartige Additive sind üblicherweise Substanzen, die in relativ kleinen Mengen Überzugsmitteln zugesetzt werden, um bestimmte Eigenschaften zu verbessern oder aber unerwünschte Eigenschaften zu verhindern. Sie sind dem Fachmann geläufig. Bei den erfindungsgemäß einsetzbaren Additiven kann es sich um feste oder flüssige Additive handeln, die als solche zugesetzt werden können. Es ist jedoch auch möglich beispielsweise feste Additive vor der Zugabe aufzuschmelzen oder anzulösen. Als Lösemittel zum Anlösen können beispielsweise solche verwendet werden, die In der herzustellenden Bindemittelkomponente enthalten sind oder dieser zugesetzt werden sollen. Beispiele für solche Additive sind Lichtschutzmittel, z.B. auf Basis von Benztriazolen und HALS-Verbindungen, Verlaufsmittel z.B. auf der Basis von (Meth)acryl-Homopolymerisaten oder Silikonöle, rheologiebeeinflussende Mittel, wie hochdisperse Kieselsäure oder polymere Harnstoffverbindungen, Verdicker, wie z.B. anvernetzte Polycarbonsäure oder Polyurethane, Antischaummittel, Netzmittel, Antihautmittel, Antiabsetzmittel, Antiflockungsmittel, Mattierungsmittel, Haftvermittler, Strukturadditive, glanzverbessernde Additive, z.B. auf Basis von Silikonverbindungen, Katalysatoren, z.B. Härtungsbeschleuniger für die Vernetzerreaktion der OH-funktionellen Bindemittel, beispielsweise organische Metallsalze, wie Dibutylzinndilaurat, Zinknaphthenat und tertiäre Aminogruppen enthaltende Verbindungen, wie Triethylamin z.B. für die Vernetzungsreaktion mit Polyisocyanaten. Diese Additive werden in üblichen, den Fachmann geläufigen Mengen eingesetzt. Beispielsweise handelt es sich dabei, je nach Additivart, um Mengen von 0,005 bis 5 Gew.-%, bezogen auf das gesamte fertiggestellte Überzugsmittel. Im Rahmen der vorliegenden Erfindung sind unter lacküblichen Additiven auch Lösemittel zu verstehen, die die anwendungstechnischen Eigenschaften von Überzugsmitteln beeinflussen und, sofern sie nicht bereits bei der Herstellung der Bindemittelkomponente vorhanden sind, auch im Rahmen der Additivzugabe des erfindungsgemäßen Verfahrens zugesetzt werden können. Derartige als Additive angesehene Lösemittel können in größeren Mengen, beispielsweise bis zu 15 Gew.-%, bezogen auf die Stammkomponente, zugesetzt werden. Beispiele für solche Lösemittel werden später aufgeführt.

Bei den ionisch und/oder nicht-ionisch modifizierten OH-funktionellen Bindemitteln handelt es sich um übliche hydroxyfunktionelle Polymere, wie sie beispielsweise zur Herstellung zweikomponentiger Lacke, z.B. Polyurethanlacke eingesetzt werden. Beispiele für hydroxyfunktionelle Polymere sind solche auf Basis von Poly(meth)acrylaten, Polyurethanen, Polyurethanharnstoffen, Polyestern, Polyethern oder Polycarbonaten, die einzeln oder in Kombination eingesetzt werden können. Die hydroxyfunktionellen Polymere haben bevorzugt eine OH-Zahl von 10 - 250 mg KOH/g.

Ionisch modifizierte hydroxyfunktionelle Polymere können anionische oder kationische bzw. in anionische oder kationische Gruppen überführbare Gruppen, also saure bzw. basische Gruppen, enthalten. Ein Beispiel für in kationische Gruppen überführbare basische Gruppen sind Aminogruppen. Beispiele für in anionische Gruppen überführbare saure Gruppen sind Carboxyl- und Sulfonsäuregruppen.

Nicht-ionisch stabilisierte hydroxyfunktionelle Polymere sind beispielsweise solche, deren Wasserverdünnbarkeit durch Einbau von hydrophilen Gruppen, z.B. von Polyethersegmenten, insbesondere von Polyethylenoxidsegmenten, in das Harzmolekül erreicht wird.

Beispiele für ionisch und/oder nicht-ionisch modifizierte OH-funktionelle Poly(meth)acrylate sind ausführlich beschrieben in EP-A-0 358 979,EP-A-0 554 747, WO-A-94/03516, WO-A-95/02005. Beispiele für verwendbare ionisch und/oder nicht-ionisch modifizierte OH-funktionelle Polyester sind beschrieben in EP-A-0 554 747, EP-A-0 537 568, WO-A-94/03513, EP-A-0 583 728 und Beispiele für ionisch und/oder nicht-ionisch modifizierte OH-funktionelle Polyurethane sind beschrieben in EP-A-0 496 205, EP-A-0 554 747, WO-A-94/03511, WO-A-94/03512, EP-A-0 603 219, EP-A-0 469 389. Zu den Polyurethanen zählen beispielsweise auch acrylierte Polyurethane, wie sie beispielsweise in der EP-A-0 657 483 genannt sind. Beispiele für Polyetherpolyole sind genannt in der EP-A-0 554 747.

Bevorzugt handelt es sich bei den OH-funktionellen Bindemitteln um Polyurethanpolyole, die gegebenenfalls fettsäuremodifiziert sein können. Die Polyurethanpolyole sind bevorzugt anionisch oder anionisch und nicht-ionisch modifiziert.

Bevorzugte Beispiele für anionisch oder anionisch und nicht-ionisch modifizierte Polyurethanpolyole haben eine OH-Zahl von 25 - 250 mg KOH/g, bevorzugt von 40 - 140 mg KOH/g, einen Gehalt an Urethangruppen von 2 - 20 Gew.-%, bevorzugt von 5 - 15 Gew.-%, bezogen auf den Harzfestkörper, ein Zahlenmittel der Molmasse (Mn) von 1000 bis 100000, bevorzugt von 1500 bis 50000 und jeweils bezogen auf 100 g Harzfestkörper, eine Säurezahl von bevorzugt 10 - 35 mg KOH/g, besonders bevorzugt von 15 - 25 mg KOH/g. Die Polyurethanpolyole können einen Gehalt an Ethylenoxideinheiten von weniger als 200 mEqu, bevorzugt von weniger als 150 mEqu, besonders bevorzugt von weniger als 100 mEqu aufweisen.

Die bevorzugten anionisch oder anionisch und nicht-ionisch modifizierten Polyurethanpolyole werden hergestellt durch
I) Herstellung eines NCO-Gruppen enthaltenden Preadduktes aus
   a) einer oder mehreren organischen Säuren mit einer sterisch gehinderten Säurefunktion und zwei mit Isocyanat reaktionsfähigen Gruppen und/oder einer oder mehreren Verbindungen mit mindestens einer seitenständigen, hydrophilen Kette mit Ethylenoxideinheiten und zwei mit Isocyanat reaktionsfähigen Gruppen, und aus
   b) einem oder mehreren aliphatischen oder cycloaliphatischen Diisocyanaten, gegebenenfalls zusammen mit einem oder mehreren aliphatischen oder cycloaliphatischen Diisocyanaten mit mindestens einer seitenständigen hydrophilen Kette mit Ethylenoxideinheiten,
II) Herstellung eines OH-Gruppen enthaltenden Prekondensates aus
   c) einem oder mehreren Polyalkoholen,
   d) gegebenenfalls einer oder mehreren Fettsäuren,
   e) einer oder mehreren Dicarbonsäuren und
   f) gegebenenfalls einem oder mehreren Polyolen mit mindestens einer seitenständigen hydrophilen Kette mit Ethylenoxideinheiten, und
III) anschließend Umsetzung der unter I) und II) erhaltenen Produkte, gegebenenfalls in Anwesenheit eines oder mehrere Monoisocyanate mit einer hydrophilen Kette mit Ethylenoxideinheiten, in derartigen Mengenteilen, daß die OH-Gruppen des unter II) erhaltenen Prekondensates im Überschuß gegenüber den vorhandenen NCO-Gruppen vorliegen.

Die Herstellung der bevorzugten OH-funktionellen Polyurethane oder Urethanalkyde erfolgt beispielsweise durch Umsetzung der Polyalkohole II) mit den Polyisocyanaten I) in der Schmelze oder in wasserfreien organischen Lösemitteln, die nicht mit Isocyanatgruppen reagieren, beispielsweise bei Temperaturen von 60 - 160°C.

Die bevorzugten anionisch oder anionisch und nicht-ionisch modifizierten OH-funktionellen Polyurethane sowie ihre Herstellung sind ausführlich beschrieben in den WO-A-94/03511 und WO-A-94/03512. Vorzugsweise werden Polyurethanpolyole ohne Ethylenoxideinheiten in hydrophilen Ketten eingesetzt.

Die bevorzugten anionisch oder anionisch und nicht-ionisch modifizierten OH-funktionellen Polyurethane können auch im Gemisch mit anderen der vorstehend beschriebenen ionisch und/oder nicht-ionisch modifizierten hydroxyfunktionellen Polymere eingesetzt werden.

In der erfindungsgemäß hergestellten Stammkomponente können geringe Mengen organische Lösemittel, bevorzugt nicht mehr als 15 Gew.-%, bezogen auf die gesamte Stammkomponente, vorhanden sein. Diese Lösemittel können, wie vorstehend beschrieben, gänzlich oder teilweise als Additive erfindungsgemäß eingearbeitet worden sein. Sie können aber auch ganz oder teilweise von der Herstellung der Bindemittel stammen oder in die wäßrige Dispersion eingearbeitet worden sein. Die organischen Lösemittel sind bevorzugt wassermischbar. Es handelt sich z.B. um übliche lacktechnische Lösemittel. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere; N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe. Über die Auswahl und Menge der Lösemittel können Verlauf und Viskosität des aus der Stammkomponente hergestellten Überzugsmittels beeinflußt werden.

Die erfindungsgemäß hergestellte Stammkomponente enthält zur Neutralisation von sauren oder basischen Gruppen zur Erzielung der anionisch oder kationisch modifizierter Bindemittel Neutralisationsmittel. Im Falle anionisch modifizierter Bindemittel sind Basen als Neutralisationsmittel enthalten. Beispiele hierfür sind Ammoniak oder organische Amine wie Triethylamin, N-Methylmorpholin, Aminoalkohole wie Dimethylisopropanolamin, Dimethylethanolamin, 2-Amino-2-methylpropanol-1. Im Falle kationisch modifizierter Bindemittel sind Säuren als Neutralisationsmittel enthalten. Bevorzugt sind organische Monocarbonsäuren, wie z.B. Ameisensäure und Essigsäure. Gut geeignet sind auch Hydroxycarbonsäuren, wie z.B. Milchsäure, Glykolsäure, Diglykolsäure, Apfelsäure, Zitronensäure, Mandelsäure, Weinsäure, Hydroxypropionsäure, Dimethylolpropionsäure.

Die unter Verwendung der erfindungsgemäß hergestellten Stammkomponente bereiteten Überzugsmittel enthalten neben der Stammkomponente eine weitere Komponente, die mit Hydroxylgruppen reaktive Funktionen enthält. Sie wird hier als OH-reaktive Komponente bezeichnet. Als OH-reaktive Komponente kommen beispielsweise in Frage Polyisocyanate oder Anhydridgruppen enthaltende Bindemittel. Anhydridgruppen enthaltende Bindemittel werden beispielsweise erhalten durch Copolymerisation von Maleinsäureanhydrid mit weiteren ungesättigten Monomeren. Beispiele für erfindungsgemäß verwendbare anhydridfunktionelle Bindemittel sind beschrieben in EP-A-0 048 128, EP-A-0 304 817 und EP-A-0 353 899.

Bevorzugt werden Polyisocyanate als OH-reaktive Komponente eingesetzt. Bei den Polyisocyanaten handelt es sich um beliebige organische Polyisocyanate mit aliphatisch, cycloaliphatisch, araliphatisch und/oder aromatisch gebundenen freien Isocyanatgruppen, wie sie dem Fachmann auf dem Lacksektor geläufig sind. Sie sind bei Raumtemperatur flüssig oder durch Zusatz organischer Lösemittel verflüssigt. Bevorzugt weisen die Polyisocyanate weisen bei 23°C eine Viskosität von 1 bis 6000 mPa.s, vorzugsweise über 5 und unter 3000 mPa.s auf.

Derartige Polyisocyanate sind allgemein bekannt und z.B. beschrieben in DE-A-38 29 587 oder DE-A-42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation vom überschüssigen Ausgangsdiisocyanat bis auf einen Restgehalt von weniger als 0,5 Gew.-% befreit worden sind.

Ebenfalls sehr gut geeignet sind sterisch behinderte Polyisocyanate der allgemeinen Formel 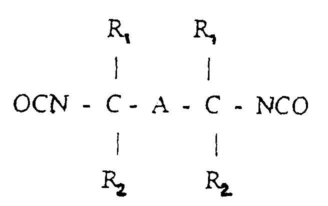 wobei R₁ = H oder R₂, R₂ = CₙH₂ₙ₊₁ mit n = 1 bis 6 sind.

Die Substituenten R₁ und R₂ sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen.

Beispiele hierfür sind 1,1,6,6-Tetramethyl-hexamethylendiisocyanat, 1,5-Dibutyl-pentamethyldiisocyanat, p- oder m-Tetramethylxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Ebenfalls geeignet, jedoch weniger bevorzugt, sind aromatische Polyisocyanate. Beispiele hierfür sind Polyisocyanate auf Basis von 2,4-Diisocysanatotoluol von 2,4-Diisocyanatotoluol oder dessen Gemischen mit 2,6-Diisocyanatotoluol oder auf Basis von 4,4'-Diisocyanatodiphenylmethan sowie deren Trimerisate.

Kurz vor der Applikation wird die erfindungsgemäß hergestellte Stammkomponente, gegebenenfalls mit Pigmenten und/oder Füllstoffen, mit der OH-reaktiven Komponente, bevorzugt den Polyisocyanaten, gründlich vermischt. Dann kann bei Bedarf mit Wasser oder geringen Mengen an organischen Lösemitteln auf Spritzviskosität eingestellt werden.

Die auf diese Weise hergestellten Überzugsmittel sind besonders geeignet zur Herstellung von pigmentierten oder transparenten Deckschichten eines lufttrocknenden oder forciert-trocknenden Mehrschichtüberzuges. Sie können jedoch auch bei höheren Temperaturen von z.B. 80 - 140°C gehärtet werden. Sie eignen sich für die Fahrzeug- und Industrielackierung, insbesondere für die Reparaturlackierung von Fahrzeugen und Fahrzeugteilen.

Die Überzugsmittel werden nach bekannten Verfahren, wie z.B. Spritzen, Tauchen, Rollen oder Rakeln, appliziert. Eine transparente Klarlackschicht kann beispielsweise nach dem Naß-in-Naß-Verfahren auf konventionelle oder wäßrige Basislacke aufgetragen werden, worauf beide Schichten gemeinsam z.B. 15 - 20 Minuten bei z.B. 50 - 80°C gehärtet werden bzw. kann die pigmentierte Decklackschicht auf übliche 1K- oder 2K-Füllerschichten aufgebracht werden.

Ein wesentlicher Vorteil der nach dem erfindungsgemäßen Verfahren hergestellten Stammkomponente ist ihre sehr gute Lagerstabilität auch über einen längeren Zeitraum von beispielsweise 2 - 3 Jahren. Die mit dieser Stammkomponente hergestellten zweikomponentigen Überzugsmittel haben eine Verarbeitungszeit von ca. 2 - 4 Stunden. Aus den Überzugsmitteln erhaltene Überzüge zeigen im Vergleich zu herkömmlich hergestellten Überzugsmitteln eine Verbesserung in Glanz und Fülle.

Die Erfindung soll an den folgenden Beispielen näher erläutert werden. Die Angabe T (Teile) bezieht sich jeweils auf das Gewicht.

### Beispiel 1

### 1.1 Herstellung einer Stammkomponente

A) 600 T Trimethylolpropan, 444 T Kokosfettsäure und 421 T Tetrahydrophthalsäureanhydrid werden gemischt und vorsichtig aufgeschmolzen. Unter Rühren und Stickstoffatmosphäre wird zusammen mit 100 T Xylol langsam auf 170 - 230°C aufgeheizt, so daß gleichmäßig Reaktionswasser azeotrop abdestilliert und die Säurezahl auf unter 0,3 absinkt.
B) In einem trockenen Reaktionsgefäß werden 212 T Dimethylolpropionsäure in 1000 T Aceton suspendiert und nach Zusatz von 704 T Isophorondiisocyanat unter Anstieg der Temperatur bis 60°C umgesetzt.

500 T Umsetzungsprodukt A) werden mit 300 T Umsetzungsprodukt B) gemischt und vorsichtig erwärmt, bis eine Wärmetönung zu beobachten ist. Nach Beendigung der Wärmetönung wird bei 60°C so lange nachgerührt, bis der NCO-Gehalt weniger als 0,2 % beträgt. Dann werden 14 T Dimethylethanolamin zugegeben. Anschließend werden die folgenden handelsüblichen Lackadditive in der angegebenen Reihenfolge zugegeben: 107 T Butylglykol, 17 T einer Lichtschutzmittelkombination aus UV-Absorber vom Benztriazol-Typ und Radikalfänger vom HALS-Typ (HALS = hindered amine light stabilizer), 4 T eines Polyurethanverdickers und 7 T eines Verlaufsmittels auf Polysiloxan-Basis. Es wird 30 Minuten bei 50°C homogenisiert. Daraufhin wird mit entionisiertem Wasser verdünnt und im Vakuum das Aceton abdestilliert, so daß eine fließfähige Dispersion entsteht (Festkörper: ca. 40 Gew.% / 60 Minuten, 150°C).

Die derart hergestellte Stammkomponente zeigt auch nach einer Lagerdauer von über zwei Jahren keine Koagulations- und/oder Absetzungserscheinungen.

### 1.2 Herstellung eines 2K-Klarlackes (Zweikomponenten-Klarlackes)

In 100 T der Stammkomponente nach Beispiel 1 werden 19 T eines handelsüblichen Polyisocyanates auf Basis eines Hexamethylendiisocyanat-Trimers (NCO-Zahl: 17 %) homogen eingerührt. Anschließend wird mit entionisiertem Wasser eine Viskosität von 20 Sekunden (DIN-4-Becher / 23°C) eingestellt. Das Überzugsmittel hat eine Verarbeitungszeit von 4 Stunden.

### 2. Beispiel (Vergleich)

### 2.1. Herstellung des Bindemittels

Komponente A) und B) werden entsprechend Beispiel 1 hergestellt. 500 T Umsetzungsprodukt A) werden mit 300 T Umsetzungsprodukt B) gemischt und vorsichtig erwärmt, bis eine Wärmetönung zu beobachten ist. Nach Beendigung der Wärmetönung wird bei 60°C so lange nachgerührt, bis der NCO-Gehalt weniger als 0,2 % beträgt. Dann werden 14 T Dimethylethanolamin und 100 T entionisiertes Wasser und nach 5 Minuten weitere 600 T entionisiertes Wasser zugegeben. Anschließend wird unter Erwärmung auf 70°C nachgerührt und dann im Vakuum das Aceton abdestilliert. Es entsteht eine fließfähige Dispersion mit ca. 43 Gew.-% Festkörpergehalt.

### 2.1. Herstellung einer Stammkomponente

In 500 T der nach Vergleichsbeispiel 2.1. hergestellten Dispersion werden die folgenden handelsüblichen Lackadditive in der angegebenen Reihenfolge homogen eingearbeitet: 13 T Butylglykol, 2 T einer Lichtschutzmittelkombination aus UV-Absorber vom Benzotriazol-Typ und Radikalfänger vom HALS-Typ, 0,6 T eines Polyurethan-Verdickers und 0,8 T eines Verlaufsmittels auf Polysiloxan-Basis. Mit entionisiertem Wasser wird ein Festkörper von 40 Gew.-% eingestellt. Bereits nach wenigen Monaten ist ein deutliches Absetzverhalten der Dispersionsteilchen zu beobachten.

### 2.3. Herstellung eines 2K-Klarlackes

In 100 T der Stammkomponente nach Vergleichsbeispiel 2.2 werden 19 T eines handelsüblichen Polyisocyanates auf Basis eines Hexamethylendiisocyanat-Trimers (NCO-Zahl: 17 %) homogen eingerührt. Anschließend wird mit entionisiertem Wasser eine Viskosität von 20 Sekunden (DIN-4-Becher / 23°C) eingestellt. Das Überzugsmittel hat eine Verarbeitungszeit von nur 2,5 Stunden.

## Patentansprüche

1. Verfahren zur Herstellung eines wäßrigen Zweikomponenten-Überzugsmittels durch Vermischen eines wäßrigen hydroxyfunktionellen Bindemittels, das ionische, nicht-ionische hydrophile und/oder neutralisierbare saure oder basische Gruppen enthält mit einer Komponente, die mit Hydroxylgruppen reaktive Funktionen enthält, kurz vor der Applikation des Zweikomponenten-Überzugsmittels, dadurch gekennzeichnet, daß man das hydroxyfunktionelle Bindemittel in Form einer lagerstabilen wäßrigen Stammkomponente bereitstellt, die hergestellt wird durch Vermischen des hydroxyfunktionellen Bindemittels, das in Gegenwart von organischem Lösemittel vorliegen kann, in nicht-wäßriger Phase mit zumindest einem Teil der vorgesehenen lacküblichen Additive, zumindest teilweises Neutralisieren der vorhandenen sauren oder basischen Gruppen vor, während oder nach dem Vermischen mit den Additiven, Homogenisieren der erhaltenen Mischung und anschließendes Überführen in die wäßrige Phase und Zusatz eines gegebenenfalls vorliegenden Rests an lacküblichen Additiven.

2. Verfahren nach Anspruch 1, dadurch gekennzeichnet, daß als lackübliche Additive ein oder mehrere Lichtschutzmittel, Verlaufsmittel, rheologiebeeinflussende Mittel, Verdicker, Antischaummittel, Netzmittel, Antihautmittel, Antiabsetzmittel, Antiflockungsmittel, Mattierungsmittel, Haftvermittler, Strukturadditive, glanzverbessernde Additive, Katalysatoren und/oder Lösemittel zugesetzt werden.

3. Verfahren nach Anspruch 1 oder 2, dadurch gekennzeichnet, daß man vorhandene saure oder basische Gruppen nach dem in-nicht-wäßriger Phase durchgeführten Vermischen und Homogenisieren mit den Additiven durch Zusatz von Neutralisationsmitteln und erneutem Homogenisieren zumindest teilweise neutralisiert.

4. Verfahren nach einem der Ansprüche 1 bis 3, dadurch gekennzeichnet, daß man das Homogenisieren bei erhöhter Temperatur durchführt.

5. Verfahren nach einem der Ansprüche 1 bis 4, dadurch gekennzeichnet, daß in die wäßrige Dispersion zugleich mit der Zugabe von restlichen lacküblichen Additiven oder anschließend ein oder mehrere Pigmenteund/oder Füllstoffe eingebracht werden.

6. Verwendung der nach einem der Ansprüche 1 bis 5 hergestellten Zweikomponenten-Überzugsmittel bei der Herstellung von pigmentierten oder transparenten Deckschichten in Mehrschichtlackierungen.

7. Verwendung nach Anspruch 6 bei der Herstellung von Mehrschichtlackierungen auf dem Kraftfahrzeugsektor.

8. Verwendung nach Anspruch 7 bei der Herstellung von Reparaturlackierungen auf dem Kraftfahrzeugsektor.

## Claims

1. Process for preparing an aqueous two-component coating composition by blending an aqueous hydroxy-functional binder that contains ionic, nonionic hydrophilic and/or neutralizable acidic or basic groups with a component that contains functions which react with hydroxyl groups, shortly before application of the two-component coating composition, characterized in that the hydroxy-functional binder is prepared in the form of a storage-stable aqueous base component that is prepared by blending the hydroxy-functional binder, which may be present in the presence of an organic solvent, in a nonaqueous phase with at least one part of the standard lacquer additives provided, with at least partial neutralization of the acidic or basic groups present before, during or after the blending with the additives, homogenization of the mixture obtained and then transfer to the acqueous phase and addition of any optionally present residue of the standard lacquer additives.

2. Process according to Claim 1, characterized in that one or more light stabilizers, flow control agents, rheology-influencing agents, thickeners, anti-foaming agents, wetting agents, anti-skinning agents, anti-sedimentation agents, anti-flocculation agents, flatting agents, adhesion promoters, structural additives, gloss-enhancing additives, catalysts and/or solvents are added as standard lacquer additives.

3. Process according to Claim 1 or 2, characterized in that acidic or basic groups present after the blending and homogenization with the additives carried out in the nonaqueous phase are at least partly neutralized by adding neutralization agents and re-homogenization.

4. Process according to one of Claims 1 to 3, characterized in that the homogenization is carried out at elevated temperature.

5. Process according to one of Claims 1 to 4, characterized in that one or more pigments and/or fillers are introduced into the aqueous dispersion at the same time as residual standard lacquer additives are added or thereafter.

6. Use of the two-component coating compositions prepared according to one of Claims 1 to 5 in the preparation of pigmented or transparent top coats in multilayer lacquerings.

7. Use according to Claim 6 in the preparation of multilayer lacquerings in the motor vehicle sector.

8. Use according to Claim 7 in the preparation of repair lacquerings in the motor vehicle sector.

## Revendications

1. Procédé pour préparer un agent de recouvrement aqueux à deux composants en mélangeant un liant aqueux à fonction hydroxy, qui comporte des groupes acides ou basiques, ioniques, non ioniques, hydrophiles et/ou neutralisables, avec un composant qui comporte des fonctions réactives avec les groupes hydroxy, peu de temps avant l'application de l'agent de recouvrement à deux composants, caractérisé en ce qu'on prépare le liant à fonction hydroxy sous forme d'un composant de base aqueux stable au stockage, qui est préparé en mélangeant le liant à fonction hydroxy, qui peut se trouver en présence d'un solvant organique, en phase non aqueuse avec au moins une partie des additifs prévus, habituels pour les vernis, on neutralise au moins partiellement les groupes acides ou basiques existants, avant, pendant ou après le mélange avec les additifs, on homogénéise le mélange obtenu, et ensuite on l'introduit dans la phase aqueuse, et on ajoute un reste d'additifs habituels pour les vernis, qui est présent le cas échéant.

2. Procédé selon la revendication 1, caractérisé en ce que l'on ajoute, comme additifs habituels dans les vernis, un ou plusieurs agents de protection contre la lumière, un ou plusieurs agents d'écoulement, un ou plusieurs agents qui ont de l'influence sur la rhéologie, un ou plusieurs agents épaississants, un ou plusieurs agents antimousses, un ou plusieurs agents mouillants, un ou plusieurs agents antipeau, un ou plusieurs agents antidépôt, un ou plusieurs agents antifloculants, un ou plusieurs agents de matage, un ou plusieurs agents d'adhésion, un ou plusieurs additifs de structure, un ou plusieurs additifs améliorant le brillant, un ou plusieurs catalyseurs, et/ou un ou plusieurs solvants.

3. Procédé selon la revendication 1 ou 2, caractérisé en ce que l'on neutralise au moins partiellement les groupes acides ou basiques présents, après le mélange et l'homogénéisation effectués en phase non aqueuse avec les additifs, par l'addition d'agents de neutralisation et une nouvelle homogénéisation.

4. Procédé selon une des revendications 1 à 3, caractérisé en ce que l'on effectue l'homogénéisation à température élevée.

5. Procédé selon une des revendications 1 à 4, caractérisé en ce que l'on introduit dans la dispersion aqueuse un ou plusieurs pigments et/ou charges , en même temps que l'addition des additifs restants, habituels dans les vernis, ou après celle-ci.

6. Utilisation des agents de recouvrement à deux composants préparés selon une des revendications 1 à 5, lors de la préparation de couches de couvertures pigmentées ou transparentes, dans les vernissages à plusieurs couches.

7. Utilisation selon la revendication 6 pour la préparation de vernissages à plusieurs couches dans le domaine des véhicules automobiles.

8. Utilisation selon la revendication 7 pour la préparation de vernissages de réparation dans le domaine des véhicules automobiles.
